# EUROPEAN PATENT APPLICATION

(11) **EP 4 815 125 A1**
(43) Date of publication of application: **30.09.2026**
(21) Application number: 24895334.1
(22) Date of filing: 06.03.2024
(51) Int. Cl.: H01M 50/107

(54) **BATTERY CELL, BATTERY AND ELECTRIC DEVICE**

(30) Priority: 29.11.2023 CN 202323248943 U
(71) Applicant: Contemporary Amperex Technology Co., Limited, Ningde, Fujian 352100 (CN)
(72) Inventor: NIU, Di, Ningde, Fujian 352100 (CN); BAI, Qinglin, Ningde, Fujian 352100 (CN); ZHANG, Zheng, Ningde, Fujian 352100 (CN); MENG, Hao, Ningde, Fujian 352100 (CN); GUO, Xin, Ningde, Fujian 352100 (CN)
(74) Representative: Ziebig Hengelhaupt Intellectual Property Attorneys Patentanwaltskanzlei PartGmbB
(86) International application number: PCT/CN2024/080266
(87) International publication number: WO 2025/112220

(57) **Abstract**

The present application provides a battery cell (20), a battery (100), and an electric apparatus. The battery cell (20) includes an electrode assembly (201), a housing (202), and a coating (203), where the electrode assembly (201) is accommodated in the housing (202), the housing (202) is provided with a welded portion (2021), the welded portion (2021) is electrically connected to a tab (2011) of the battery cell (20), and the coating (203) is disposed on an outer side of the housing (202) and covers the welded portion (2021). By covering the welded portion (2021) with the coating (203), the welded portion (2021) is protected, reducing the likelihood of corrosion of the welded portion (2021), which is conducive to improving the reliability of the battery cell (20).

## Description

### CROSS-REFERENCE TO RELATED APPLICATIONS

The present application claims priority to Chinese Patent Application No. 202323248943.X, filed on November 29, 2023, and entitled "BATTERY CELL, BATTERY, AND ELECTRIC APPARATUS", which is incorporated herein by reference in its entirety.

### TECHNICAL FIELD

The present application relates to the field of battery technologies, and in particular, to a battery cell, a battery, and an electric apparatus.

### BACKGROUND

Batteries have advantages such as high specific energy and high power density, and are widely used in electronic devices and transportation tools, such as mobile phones, notebook computers, electric bicycles, electric vehicles, electric airplanes, electric ships, and electric tools.

With the continuous expansion of application of batteries, the requirements for the operational reliability of batteries are increasingly stringent. Improving the reliability of batteries has always been a key focus for those skilled in the art.

### SUMMARY

In view of the above issues, the present application provides a battery cell, a battery, and an electric apparatus. The battery cell exhibits good reliability.

According to a first aspect, some embodiments of the present application provide a battery cell, where the battery cell includes an electrode assembly, a housing, and a coating. The electrode assembly includes a tab; the electrode assembly is accommodated in the housing, the housing is provided with a welded portion, and the welded portion is electrically connected to the tab; and the coating is disposed on an outer side of the housing and covers the welded portion.

In the above structure, by covering the welded portion with the coating, the welded portion is protected, reducing the likelihood of corrosion of the welded portion, which is conducive to improving the reliability of the battery cell.

According to the battery cell provided by some embodiments of the present application, the housing includes a wall portion, an outer side of the wall portion is provided with a recess, and a bottom wall of the recess is provided with the welded portion; and at least part of the coating is accommodated in the recess. Through the above structure, a molten zone formed by welding the tab to the welded portion is located at the bottom wall of the recess, reducing the likelihood of the molten zone protruding from the wall portion, which is conducive to reducing the likelihood of the molten zone being impacted.

According to the battery cell provided by some embodiments of the present application, the coating is entirely accommodated in the recess, such that both the coating and the molten zone of the welded portion are located in the recess, which is conducive to reducing the likelihood of the molten zone and the coating being impacted, thereby not only facilitating an extended service life of the coating but also improving the reliability of the connection between the tab and the welded portion.

According to the battery cell provided by some embodiments of the present application, an outer surface of the coating is flush with an outer surface of the wall portion, resulting in a smooth outer surface of the wall portion, which is conducive to improving the flatness of the appearance of the battery cell.

According to the battery cell provided by some embodiments of the present application, a thickness of the coating is H1, where 5 µm ≤ H1 ≤ 400 µm, ensuring that the coating provides good protection while avoiding paint waste due to excessive thickness.

According to the battery cell provided by some embodiments of the present application, 10 µm ≤ H1 ≤ 200 µm, ensuring that the coating provides good protection and is not prone to causing paint waste.

According to the battery cell provided by some embodiments of the present application, the housing further includes a plating layer disposed on the outer side of the wall portion, the plating layer surrounding the welded portion; and the coating is connected to the plating layer. The plating layer can protect the wall portion, mitigating corrosion of the wall portion.

According to the battery cell provided by some embodiments of the present application, along a thickness direction of the wall portion, a projection of the welded portion lies within a range of the coating, enabling the welded portion to be comprehensively covered and protected by the coating, which is conducive to reducing the likelihood of corrosion of the welded portion.

According to the battery cell provided by some embodiments of the present application, the wall portion is made of carbon steel, and the plating layer is a nickel plating layer, enabling the plating layer to protect the wall portion and mitigate corrosion of the wall portion.

According to the battery cell provided by some embodiments of the present application, a thickness of the plating layer is H2, where 0.05 µm ≤ H2 ≤ 10 µm, ensuring that the plating layer provides good protection while avoiding waste or increased costs due to excessive thickness.

According to the battery cell provided by some embodiments of the present application, 0.1 µm ≤ H2 ≤ 5 µm, ensuring that the plating layer provides good protection and is not prone to causing waste or increased costs.

According to the battery cell provided by some embodiments of the present application, the coating includes a coating material, the coating material including polyacrylate, polyurethane, or epoxy resin, enabling the coating material to be formed on an outer surface of the welded portion.

According to the battery cell provided by some embodiments of the present application, a viscosity range of the coating material is from 0.5 cps to 2000 cps, enabling the viscosity of the coating material to meet the requirements of coating processes such as spraying, printing, or dispensing, facilitating the application of the coating material to the welded portion.

According to the battery cell provided by some embodiments of the present application, the viscosity range of the coating material is 1 cps to 1000 cps, enabling the coating material to be conveniently applied to the welded portion.

According to the battery cell provided by some embodiments of the present application, an adhesion force of the coating to the welded portion ranges from level 0 to level 1, ensuring that the adhesion force of the coating to the welded portion is strong, enabling the coating to firmly adhere to the welded portion and resist peeling, which is conducive to extending the service life of the coating.

According to the battery cell provided by some embodiments of the present application, a hardness of the coating is less than a hardness of the welded portion, such that when the battery cell is impacted, the coating is more prone to damage than the welded portion to absorb the impact, thereby facilitating reducing the likelihood of damage to the welded portion.

According to the battery cell provided by some embodiments of the present application, a distance by which an edge of the coating extends beyond an edge of the welded portion is L, where L > 0.1 mm, ensuring complete coverage of the welded portion by the coating, which facilitates better protection of the welded portion by the coating and reduces the likelihood of corrosion of the welded portion.

According to a second aspect, some embodiments of the present application further provide a battery, where the battery includes the battery cell provided by any of the above technical solutions.

According to a second aspect, some embodiments of the present application further provide an electric apparatus, where the electric apparatus includes the battery provided by the above technical solutions, and the battery is configured to supply electrical energy.

The technical solutions provided by the embodiments of the present disclosure bring at least the following beneficial effects:
Some embodiments of the present application provide a battery cell. The battery cell includes an electrode assembly, a housing, and a coating, where the electrode assembly is accommodated in the housing, the housing is provided with a welded portion, the welded portion is electrically connected to a tab of the battery cell, and the coating is disposed on an outer side of the housing and covers the welded portion. By covering the welded portion with the coating, the welded portion is protected, reducing the likelihood of corrosion of the welded portion, which is conducive to improving the reliability of the battery cell.

The above descriptions are merely an overview of the technical solution of the present application. For a better understanding of the technical means in the present application such that they can be implemented according to the content of the specification, and to make the above and other objectives, features and advantages of the present application more obvious and easier to understand, the following describes specific embodiments of the present application.

### BRIEF DESCRIPTION OF DRAWINGS

Persons of ordinary skill in the art can clearly understand various other advantages and benefits by reading the detailed description of the preferred embodiments below. The accompanying drawings are merely intended to illustrate the preferred embodiments and are not intended to limit the present application. Moreover, throughout the accompanying drawings, the same reference signs represent the same components. In the drawings:
FIG. 1 is a schematic structural diagram of a vehicle provided by some embodiments of the present application;
FIG. 2 is an exploded view of a battery provided by some embodiments of the present application;
FIG. 3 is a cross-sectional view of a battery cell provided by some embodiments of the present application;
FIG. 4 is an enlarged view at A in FIG. 3;
FIG. 5 is a cross-sectional view of a battery cell provided by other embodiments of the present application;
FIG. 6 is an enlarged view at B in FIG. 5;
FIG. 7 is a schematic structural diagram of a battery cell provided by some embodiments of the present application;
FIG. 8 is a cross-sectional view of a battery cell provided by some other embodiments of the present application; and
FIG. 9 is an enlarged view at C in FIG. 8.

Reference signs in specific embodiments are described as follows:
10. box; 101. first box body; 102. second box body; 20. battery cell; 201. electrode assembly; 2011. tab; 202. housing; 2021. welded portion; 2022. wall portion; 2023. recess; 2024. plating layer; 2025. housing body; 2026. end cover; 203. coating; 204. fluid collecting member; 1000. vehicle; 100. battery; 200. controller; and 300. motor.

### DESCRIPTION OF EMBODIMENTS

To make the objectives, technical solutions, and advantages of the embodiments of the present application clearer, the following clearly describes the technical solutions in the embodiments of the present application with reference to the accompanying drawings in the embodiments of the present application. Apparently, the described embodiments are some but not all of the embodiments of the present application. All other embodiments obtained by persons of ordinary skill in the art based on some embodiments of the present application without creative efforts shall fall within the protection scope of the present application.

Unless otherwise defined, all technical and scientific terms used in the present application shall have the same meanings as commonly understood by persons skilled in the art to which the present application relates. The terms used in the specification of the present application are intended to merely describe the specific embodiments rather than to limit the present application. The terms "include", "comprise", and any variations thereof in the specification, claims, and brief description of drawings of the present application are intended to cover non-exclusive inclusions. In the specification, claims, or accompanying drawings of the present application, the terms "first", "second", and the like are intended to distinguish between different objects rather than to describe a particular order or a primary-secondary relationship.

In the present application, reference to "embodiment" means that specific features, structures, or characteristics described with reference to the embodiment may be incorporated in at least one embodiment of the present application. The term "embodiment" appearing in various places in the specification does not necessarily refer to the same embodiment or an independent or alternative embodiment that is exclusive of other embodiments.

In the description of the present application, it should be noted that unless otherwise specified and defined explicitly, the terms "mount", "connect", "join", and "attach" should be understood in their general senses. For example, they may refer to a fixed connection, a detachable connection, or an integral connection; and a direct connection, an indirect connection via an intermediate medium, or an internal communication between two elements. Persons of ordinary skills in the art can understand specific meanings of these terms in the present application as appropriate to specific situations.

The term "and/or" in the present application is only an associative relationship for describing associated objects, indicating that three relationships may be present. For example, A and/or B may indicate the following three cases: presence of only A; presence of both A and B; and presence of only B. In addition, the character "/" in the present application generally indicates an "or" relationship between the contextually associated objects.

In the embodiments of the present application, the same reference signs denote the same components, and for brevity, in different embodiments, detailed descriptions of the same components are not repeated. It should be understood that as shown in the accompanying drawings, sizes such as thickness, length, and width of various components and sizes such as thickness, length, and width of integrated devices in the embodiments of the present application are merely for illustrative purposes and should not constitute any limitations on the present application.

The term "parallel" in the embodiments of the present application not only includes the absolutely parallel case, but also includes the substantially parallel case in the conventional understanding of engineering. Likewise, the term "perpendicular" not only includes the absolutely perpendicular case, but also includes the substantially perpendicular case in the conventional understanding of engineering. For example, two directions may be considered to be perpendicular if an included angle between the two directions is 85° to 90°, and two directions may be considered to be parallel if the included angle between the two directions is 0° to 5°.

In the present application, "multiple" means more than two (inclusive).

Currently, from the perspective of market development, application of batteries is becoming more and more extensive. Batteries have been widely used in not only energy storage power supply systems such as hydroelectric, thermal, wind, and solar power plants, but also other fields including electric transportation tools such as electric bicycles, electric motorcycles and electric vehicles, military equipment, and aerospace.

The battery mentioned in the embodiments of the present application is a single physical module that includes one or more battery cells for providing higher voltage and capacity.

The battery cell may be a secondary battery cell, and the secondary battery cell refers to a battery cell whose active material can be activated for continuous use through charging after the battery is discharged.

The battery cell may be a lithium-ion battery cell, a sodium-ion battery cell, a sodium-lithium-ion battery cell, a lithium metal battery cell, a sodium metal battery cell, a lithium-sulfur battery cell, a magnesium-ion battery cell, a nickel-metal hydride battery cell, a nickel-cadmium battery cell, a lead-acid battery cell, or the like.

The battery cell may include an electrode assembly, an electrolyte, and a housing, where the electrode assembly and the electrolyte are accommodated in the housing, and the housing is configured to encapsulate the electrode assembly, the electrolyte, and other components. The electrode assembly includes a positive electrode, a negative electrode, and a separator for isolating the positive electrode and the negative electrode, where the electrolyte conducts ions between the positive electrode and the negative electrode.

The housing may include a housing body and an end cover, with the end cover covering an opening of the housing body, together forming a cavity for accommodating the electrode assembly, the electrolyte, and other components.

In some embodiments, the battery may be a battery pack, and the battery pack includes a box and a battery cell, where the battery cell or a battery module is accommodated in the box.

In some embodiments, the box may be used as part of the chassis structure of a vehicle. For example, part of the box may become at least part of the chassis of a vehicle, or part of the box may become at least parts of a cross beam and longitudinal beam of a vehicle.

In some embodiments, the battery may be an energy storage apparatus. The energy storage apparatus includes an energy storage container, an energy storage electric cabinet, and the like.

In the related art, the tab of the electrode assembly in a battery cell typically needs to be welded to the housing. However, welding may damage an anti-corrosion layer on the housing, preventing effective protection of the housing and making the welded area prone to corrosion, which is not conducive to improving the reliability of the battery cell.

To improve the reliability of the battery cell, some embodiments of the present application provide a battery cell, where the battery cell includes an electrode assembly, a housing, and a coating The electrode assembly is accommodated in the housing, the housing is provided with a welded portion, the welded portion is electrically connected to a tab of the battery cell, and the coating is disposed on an outer side of the housing and covers the welded portion. By covering the welded portion with the coating, the welded portion is protected, reducing the likelihood of corrosion of the welded portion, which is conducive to improving the reliability of the battery cell.

The battery cell described in the embodiments of the present application is applicable to batteries and electric apparatuses using batteries. The battery cell may be used, but is not limited to, in batteries, as well as in vehicles, airplanes, ships, electronic devices, electric tools, and other products, thereby improving the reliability of these products.

The electric apparatus may be a vehicle, a mobile phone, a portable device, a notebook computer, a ship, a spacecraft, an electric toy, an electric tool, or the like. The vehicle may be a fossil fuel vehicle, a natural gas vehicle, or a new energy vehicle. The new energy vehicle may be a battery electric vehicle, a hybrid electric vehicle, a range-extended electric vehicle, or the like. The spacecraft includes an airplane, a rocket, a space shuttle, a spaceship, and the like. The electric toy includes a fixed or mobile electric toy, for example, a game console, an electric toy car, an electric toy ship, and an electric toy airplane. The electric tool includes an electric metal cutting tool, an electric grinding tool, an electric assembly tool, and an electric railway-specific tool, for example, an electric drill, an electric grinder, an electric wrench, an electric screwdriver, an electric hammer, an electric impact drill, a concrete vibrator, and an electric planer.

For ease of description, an electric apparatus according to an embodiment of the present application being a vehicle 1000 is used as an example for description of the following embodiments.

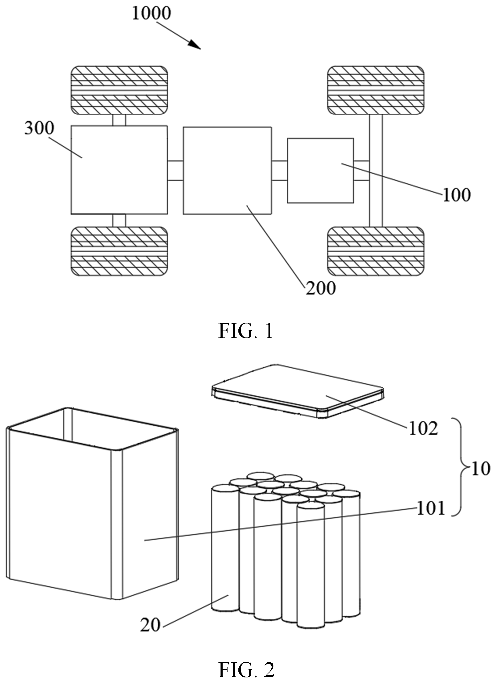

Referring to FIG. 1, FIG. 1 is a schematic structural diagram of the vehicle 1000 according to some embodiments of the present application. The vehicle 1000 may be a fossil fuel vehicle, a natural gas vehicle, or a new energy vehicle. The new energy vehicle may be a battery electric vehicle, a hybrid electric vehicle, a range-extended electric vehicle, or the like. The vehicle 1000 is provided with a battery 100 inside, where the battery 100 may be disposed at the bottom, front, or rear of the vehicle 1000. The battery 100 may be configured to supply power to the vehicle. For example, the battery 100 may be used as an operational power source for the vehicle 1000. The vehicle 1000 may further include a controller 200 and a motor 300, where the controller 200 is configured to control the battery 100 to supply power to the motor 300, for example, to satisfy power needs of start, navigation, and driving of the vehicle 1000.

In some embodiments of the present application, the battery 100 can be used as not only the operational power source for the vehicle 1000 but also a driving power source for the vehicle 1000, replacing or partially replacing fossil fuel or natural gas to provide driving traction for the vehicle 1000.

Referring to FIG. 2, FIG. 2 is an exploded view of a battery 100 provided by some embodiments of the present application. The battery 100 includes a box 10 and a battery cell 20, where the battery cell 20 is accommodated in the box 10. The box 10 is configured to provide an accommodating space for the battery cell 20. The battery cell 20 in the battery 100 may be provided in plurality, and the plurality of battery cells 20 may be connected in series, parallel, or series-parallel, where being connected in series-parallel means a combination of series and parallel connections of the plurality of battery cells 20. The plurality of battery cells 20 may be directly connected in series, parallel, or series-parallel, and then an entirety of the plurality of battery cells 20 is accommodated in the box 10. Certainly, the battery 100 may alternatively be formed in a manner that a plurality of battery cells 20 are connected in series, parallel, or series-parallel first to form a battery module and then a plurality of battery modules are connected in series, parallel, or series-parallel to form an entirety, which is accommodated in the box 10.

The box 10 may include a first box body 101 and a second box body 102. The first box body 101 and the second box body 102 fit together to jointly define an accommodating space for accommodating the battery cell 20. The first box 101 and the second box body 102 may be of various shapes, such as cylinder or cuboid. The first box body 101 may be a hollow structure with one side open, and the second box body 102 may also be a hollow structure with one side open, where the open side of the second box body 102 covers the open side of the first box body 101 to form the box 10 having a mounting space.

The battery 100 may further include other structures. For example, the battery 100 may further include a busbar configured to implement electrical connection between the plurality of battery cells 20.

Each battery cell 20 may be a secondary battery or a primary battery, or may be a lithium-sulfur battery, a sodium-ion battery, or a magnesium-ion battery, without being limited thereto. The battery cell 20 may be cylindrical, flat, cuboid, or of other shapes.

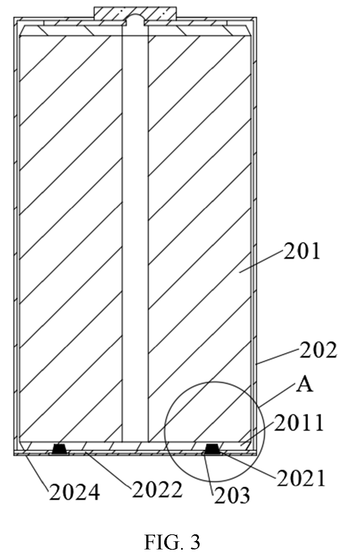

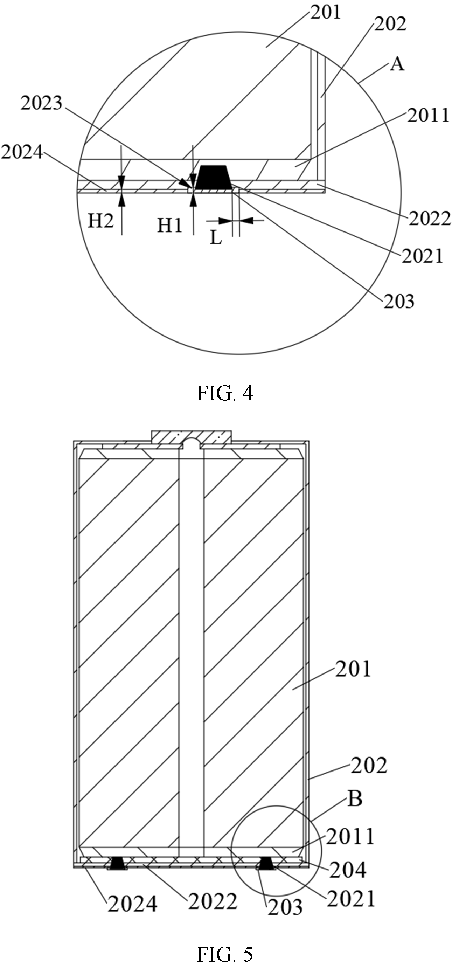

In some embodiments of the present application, as shown in FIG. 3 and FIG. 4, the battery cell 20 includes an electrode assembly 201, a housing 202, and a coating 203, where the electrode assembly 201 includes a tab 2011, the electrode assembly 201 is accommodated in the housing 202, the housing 202 is provided with a welded portion 2021, and the welded portion 2021 is electrically connected to the tab 2011; and the coating 203 is disposed on an outer side of the housing 202 and covers the welded portion 2021.

The electrode assembly 201 may be a component in which electrochemical reactions take place in the housing 202. The housing 202 may include one or more electrode assemblies 201. The electrode assembly 201 may be a wound structure or a laminated structure.

The electrode assembly 201 is in contact with an electrolyte, and active ions (for example, lithium ions) can be conducted between the electrode assembly 201 and the electrolyte. The electrode assembly 201 includes a positive electrode plate, a negative electrode plate, and a separator, where the positive electrode plate, the negative electrode plate, and the separator are stacked, and the separator is disposed between the positive electrode plate and the negative electrode plate to prevent short circuits. Both the positive electrode plate and the negative electrode plate are provided with tabs 2011, where the tabs 2011 are configured to lead out electrical energy or charge electrical energy in.

The housing 202 is a component configured to encapsulate the electrode assembly 201 and the electrolyte. A cavity is formed in the housing 202, and the electrode assembly 201 and the electrolyte are disposed in the cavity and surrounded by the housing 202.

The housing 202 may have various shapes and sizes, such as a cuboid shape, a hexagonal prism, or the like. Specifically, the shape of the housing 202 may be determined based on a specific shape and size of the electrode assembly 201. housing 202 may be made of a variety of materials, and the material of the housing includes, but is not limited to copper, iron, aluminum, stainless steel, or aluminum alloy.

The welded portion 2021 may be a partial structure on the housing 202and is configured to electrically connect to the tab 2011 of the electrode assembly 201, so that the electrode assembly 201 is electrically connected to the housing 202, such that external devices can be electrically connected to the electrode assembly 201 through the housing 202.

The coating 203 may be a layered structure disposed on a surface of the housing 202. The coating is disposed on an outer surface of the housing 202 and covers the welded portion 2021, achieving protection for the welded portion 2021, reducing the likelihood of contact between the welded portion 2021 and external air, which is conducive to reducing the likelihood of corrosion of the welded portion 2021.

In the above structure, by covering the welded portion 2021 with the coating 203, the welded portion 2021 is protected, reducing the likelihood of corrosion of the welded portion 2021, which is conducive to improving the reliability of the battery cell 20.

For example, the tab 2011 may be connected to an inner side of the welded portion 2021 through welding, where the material of the tab 2011 is fused with the material of the welded portion 2021, achieving electrical connection between the tab 2011 and the welded portion 2021, which is conducive to reducing the resistance between the tab 2011 and the welded portion 2021.

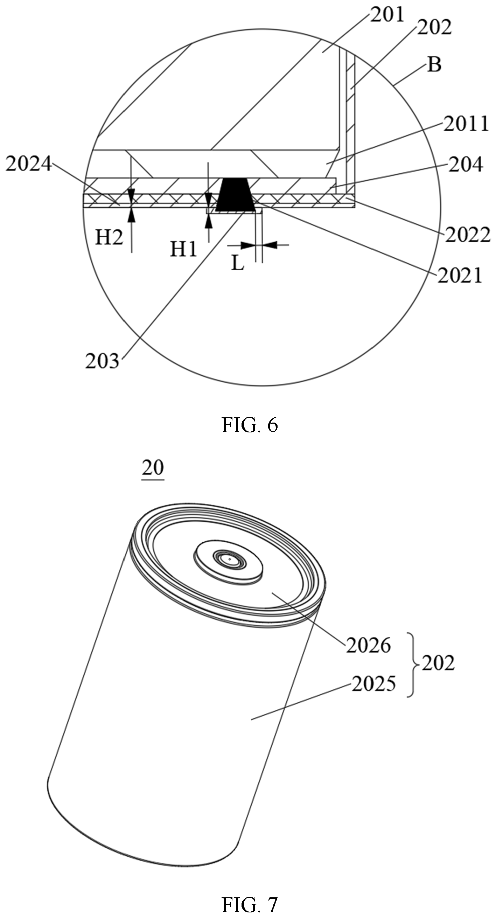

For example, as shown in FIG. 5 and FIG. 6, the tab 2011 may also be connected to the inner side of the welded portion 2021 through a fluid collecting member 204. The fluid collecting member 204 includes a welded structure, the tab 2011 is welded to a current collector, the welded structure of the current collector is welded to the welded portion 2021, the material of the fluid collecting member 204 is fused with the material of the welded portion 2021, and the tab 2011 is electrically connected to the welded portion 2021 through the fluid collecting member 204. This facilitates reducing the difficulty of electrical connection between the tab 2011 and the housing 202.

In some embodiments, the housing 202 includes a wall portion 2022, an outer side of the wall portion 2022 is provided with a recess 2023, and a bottom wall of the recess 2023 is provided with the welded portion 2021; and at least part of the coating 203 is accommodated in the recess 2023.

As shown in FIG. 7, the housing 202 may include a housing body 2025 and an end cover 2026, where the housing body 2025 forms an opening, the end cover 2026 covers the opening, and the wall portion 2022 may be either the end cover 2026 or a wall structure in the housing body 2025.

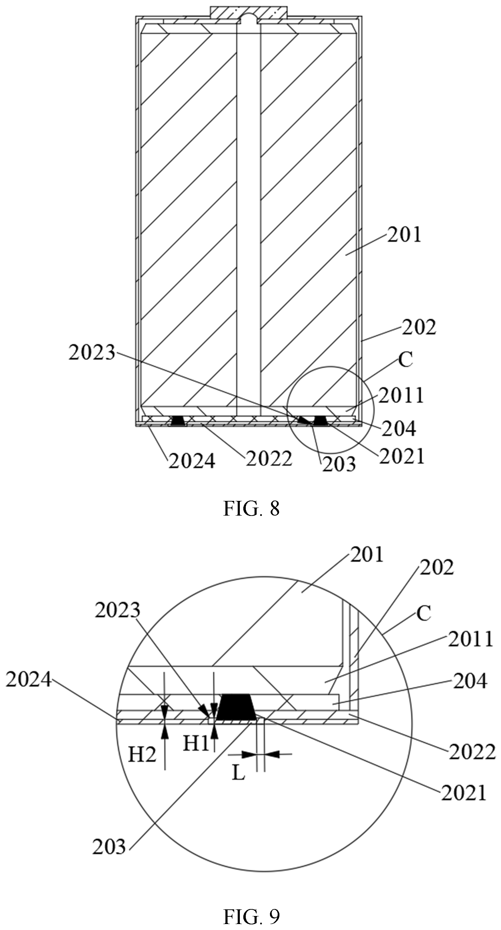

The wall portion 2022 may be a wall structure in the housing 202. As shown in FIG. 8 and FIG. 9, the recess 2023 may be a recessed structure formed on the wall portion 2022 by removing material and is configured to accommodate a molten zone formed by welding in the welded portion 2021. By disposing the recess 2023 on the outer side of the wall portion 2022 and providing the welded portion 2021 at the bottom wall of the recess 2023, the molten zone formed by welding the tab 2011 to the welded portion 2021 is located at the bottom wall of the recess 2023, reducing the likelihood of the molten zone protruding from the wall portion 2022, which is conducive to reducing the likelihood of the molten zone being impacted.

At least part of the coating 203 is accommodated in the recess 2023, which may be that the entirety of the coating 203 is accommodated in the recess 2023, such that both the coating 203 and the molten zone of the welded portion 2021 do not protrude from the wall portion 2022; alternatively, a portion of the coating 203 is accommodated in the recess 2023, and another portion of the coating 203 protrudes from the recess 2023. Those skilled in the art may determine whether the coating 203 protrudes from the recess 2023 based on actual conditions.

By accommodating at least part of the coating 203 in the recess 2023, the coating 203 fills the recess 2023 to protect the welded portion 2021, and by utilizing the confinement effect of the recess 2023 on the coating 203, the recess 2023 can position the coating 203, which is conducive to improving the ease of the coating 203 covering the surface of the welded portion 2021. In some embodiments, the coating 203 may be formed by curing a paint. The coating 203 may be formed by self-leveling and curing of the paint in the recess 2023; alternatively, the coating 203 may be formed by spraying the paint onto the bottom wall of the recess 2023 and then curing. Under the confinement effect of the recess 2023, the coating 203 is easily formed on the bottom wall of the recess 2023.

In some embodiments, the coating 203 is entirely accommodated in the recess 2023.

The coating 203 is entirely accommodated in the recess 2023, such that both the coating 203 and the molten zone of the welded portion 2021 are located in the recess 2023, which is conducive to reducing the likelihood of the molten zone and the coating 203 being impacted, thereby not only facilitating an extended service life of the coating 203 but also improving the reliability of the connection between the tab 2011 and the welded portion 2021.

In some embodiments, an outer surface of the coating 203 is flush with an outer surface of the wall portion 2022.

The outer surface of the coating 203 is flush with the outer surface of the wall portion 2022, resulting in a smooth outer surface of the wall portion 2022, which is conducive to improving the flatness of the appearance of the battery cell 20.

In some embodiments, a thickness of the coating 203 is H1, where 5 µm ≤ H1 ≤ 400 µm.

By setting the thickness range of the coating 203 to be 5 µm to 400 µm, the coating 203 provides good protection while avoiding paint waste due to excessive thickness. For example, 10 µm ≤ H1 ≤ 200 µm, by setting the thickness range of the coating 203 to be 10 µm to 200 µm, the coating 203 not only provides good protection to the welded portion 2021 but is also not prone to causing paint waste.

In some embodiments, the thickness of the coating 203 may be set to be 15 µm, 30 µm, 50 µm, or 200 µm. Those skilled in the art may select the thickness of the coating 203 based on the assembly conditions of the battery cell 20 with external devices.

Whether the thickness of the coating 203 meets the requirements can be determined using the grayscale value of the coating 203. For example, the grayscale value corresponding to a thickness of 5 µm for the coating 203 is set as a first preset value, and the grayscale value corresponding to a thickness of 400 µm for the coating 203 is set as a second preset value, where the first preset value is greater than the second preset value. If the grayscale value of the coating 203 is greater than the first preset value, it can be determined that the thickness of the coating 203 is less than 5 µm, failing to meet the minimum requirement for the thickness of the coating 203. If the grayscale value of the coating 203 is less than the first preset value and greater than the second preset value, it can be determined that the thickness of the coating 203 is greater than 5 µm and less than 400 µm, meeting the requirement for the thickness of the coating 203. If the grayscale value of the coating 203 is less than the second preset value, it can be determined that the thickness of the coating 203 exceeds 400 µm, failing to meet the requirement.

The coating 203 may also be a transparent coating 203 with a fluorescent agent, and whether the thickness of the coating 203 meets the requirements can be determined using the fluorescence intensity of the coating 203.

In some embodiments, the housing further includes a plating layer 2024 disposed on the outer side of the wall portion 2022, the plating layer 2024 surrounding the welded portion 2021; and the coating 203 is connected to the plating layer 2024.

The plating layer 2024 may be a layered structure disposed on the wall portion 2022. The plating layer 2024 may be a plastic layer or a metal layer, and those skilled in the art may configure it based on actual conditions. In some embodiments, the wall portion 2022 may be made of carbon steel, and the plating layer 2024 disposed on the outer side thereof may be formed by nickel plating, so that the plating layer 2024 can protect the wall portion 2022 and mitigating corrosion of the wall portion 2022.

The plating layer 2024 surrounds the welded portion 2021, which may be that the plating layer 2024 disposed on the outer side of the wall portion 2022 is absent at the welded portion 2021. When the welded portion 2021 is connected to the tab 2011 by welding, the plating layer 2024 on the outer side of the welded portion 2021 is damaged, forming an absence at that location.

The coating 203 covering the welded portion 2021 is connected to the plating layer 2024, which may be that a projection of the coating 203 in the thickness direction of the wall portion 2022 overlaps with a projection of the absence of the plating layer 2024 in the thickness direction of the wall portion 2022, and an edge of the coating 203 is connected to an edge of the plating layer 2024; alternatively, a projection of the coating 203 in the thickness direction of the wall portion 2022 overlaps with a projection of at least part of the plating layer 2024 in the thickness direction of the wall portion 2022, where in the overlapping portion, the coating 203 is adhered to an outer surface of the plating layer 2024.

In some embodiments, along the thickness direction of the wall portion 2022, a projection of the welded portion 2021 lies within a range of the coating 203.

By ensuring that the projection of the welded portion 2021 in the thickness direction of the housing 202 lies within the range of the coating 203, the welded portion 2021 and the absence of the plating layer 2024 are completely covered by the coating 203, facilitating comprehensive protection, reducing the likelihood of contact between the welded portion 2021 and air, which is conducive to reducing the likelihood of corrosion of the welded portion 2021.

In some embodiments, a thickness of the plating layer 2024 is H2, where 0.05 µm ≤ H2 ≤ 10 µm.

By setting the thickness range of the plating layer 2024 to be 0.05 µm to 10 µm, the plating layer 2024 provides good protection while avoiding waste or increased costs due to excessive thickness. For example, 0.1 µm ≤ H2 ≤ 5 µm, by setting the thickness range of the plating layer 2024 to be 0.1 µm to 5 µm, the plating layer 2024 not only provides good protection to the wall portion 2022 but also reduces material waste.

In some embodiments, the thickness of the plating layer 2024 may be set to be 0.5 µm, 1 µm, 2 µm, or 3 µm. Those skilled in the art may set the thickness of the plating layer 2024 based on actual conditions.

In some embodiments, the coating 203 includes a coating material, where the coating material includes polyacrylate, polyurethane, or epoxy resin.

The coating material may refer to a material adhered to the outer side of the housing 202 to form the coating 203. In some embodiments, the coating material may be applied to the welded portion 2021 by spraying, allowing the coating material to adhere to the outer side of the welded portion 2021 to form the coating 203 covering the welded portion 2021; alternatively, the coating material may be applied to the welded portion 2021 by printing, allowing the coating material to adhere to the outer side of the welded portion 2021 to form the coating 203 covering the welded portion 2021; or the coating material may be applied to the welded portion 2021 by dispensing, allowing the coating material to adhere to the outer side of the welded portion 2021 to form the coating 203 covering the welded portion 2021.

The coating material includes polyacrylate, polyurethane, or epoxy resin, which may be that the core material of the coating material is polyacrylate, polyurethane, or epoxy resin; alternatively, the coating material may further include materials such as organosilanes or alkyl phosphates that enhance material adhesion.

In some embodiments, a viscosity range of the coating material is 0.5 cps to 2000 cps.

By setting the viscosity range of the coating material to be 0.5 cps to 2000 cps, the viscosity of the coating material can meet the requirements of coating processes such as spraying, printing, or dispensing, facilitating the application of the coating material to the welded portion 2021. For example, the viscosity range of the coating material may be set to be 1 cps to 1000 cps, enabling convenient application of the coating material to the welded portion 2021.

In some embodiments, the viscosity of the coating material may be set to be 0.5 cps, 1 cps, 500 cps, or 800 cps. Those skilled in the art may set the viscosity of the coating material based on actual conditions, so that the coating material can be compatible with the adopted coating process.

For example, the viscosity of the coating material may be determined and obtained in accordance with the national standard GB/T 24148.4-2009 using a rotational viscometer, with the specific measurement method referring to the national standard GB/T 24148.4-2009. Details are not described herein again.

In some embodiments, an adhesion force of the coating 203 to the welded portion 2021 ranges from level 0 to level 1.

By setting the adhesion force of the coating 203 to the welded portion 2021 within the range of level 0 to level 1, the adhesion force of the coating 203 to the welded portion 2021 is strong, enabling the coating 203 to firmly adhere to the welded portion 2021 and resist peeling, which is conducive to extending the service life of the coating 203. By setting the adhesion force of the coating 203 to the welded portion 2021 to level 0 or level 1, the coating 203 is firmly adhered to the welded portion 2021 and is not prone to peeling off.

For example, the adhesion force of the coating 203 to the welded portion 2021 may be determined and obtained using the cross-cut test in accordance with the national standard GB/T 9286-1998, with the specific measurement method referring to the national standard GB/T 9286-1998. Details are not described herein again.

In some embodiments, a hardness of the coating 203 is less than a hardness of the welded portion 2021.

By setting the hardness of the coating 203 to be less than the hardness of the welded portion 2021, when the battery cell 20 is impacted, the coating 203 is not prone to causing damage to the welded portion 2021, thereby facilitating reducing the likelihood of damage to the welded portion 2021. The hardness of the coating 203 and the hardness of the welded portion 2021 may both be Brinell hardness, which can be determined and obtained in accordance with the national standard GB/T 231.1-2019, with the specific measurement method referring to the national standard GB/T 231.1-2019. Details are not described herein again.

In some embodiments, a surface of the coating 203 has a certain surface tension, making it possible to provide an adhesive on the coating 203, where the adhesive can adhere the outer surface of the battery cell 20 to other components.

In some embodiments, a distance by which an edge of the coating 203 extends beyond an edge of the welded portion 2021 is L, where L > 0.1 mm.

The distance by which the edge of the coating 203 extends beyond the edge of the welded portion 2021 is greater than 0.1 mm, which may be that, in any direction perpendicular to the thickness direction of the housing 202, the distance by which the edge of the coating 203 extends beyond the edge of the welded portion 2021 is greater than 0.1 mm. Along the thickness direction of the housing 202, the projection of the welded portion 2021 lies within a projection range of the coating 203, and a distance by which the projection edge of the coating 203 extends beyond a projection edge of the welded portion 2021 is greater than 0.1 mm, ensuring complete coverage of the welded portion 2021 by the coating 203, which facilitates better protection of the welded portion 2021 by the coating 203 and reduces the likelihood of corrosion of the welded portion 2021.

For example, the distance by which the edge of the coating 203 extends beyond the edge of the welded portion 2021 may be 0.5 mm, 0.8 mm, or 1 mm, ensuring good coverage effect of the welded portion 2021 by the coating 203.

Some embodiments of the present application further provide a battery 100, where the battery 100 includes the battery cell 20 provided by the above technical solutions.

Some embodiments of the present application further provide an electric apparatus, where the electric apparatus includes the battery 100 provided by the above technical solutions, and the battery 100 is configured to supply electrical energy.

Some embodiments of the present application provide a battery cell 20. As shown in FIG. 8 and FIG. 9, the battery cell 20 includes an electrode assembly 201, a housing 202, a fluid collecting member 204, and a coating 203, where the electrode assembly 201 is accommodated in the housing 202, an outer side of a wall portion 2022 of the housing 202 is provided with a recess 2023, a bottom wall of the recess 2023 is provided with a welded portion 2021, a tab 2011 of the electrode assembly 201 is welded to the fluid collecting member 204, the fluid collecting member 204 is welded to the welded portion 2021, the coating 203 is entirely accommodated in the recess 2023 and covers the welded portion 2021, the coating 203 fills the recess 2023 completely, and an outer surface of the coating 203 is flush with an outer surface of the wall portion 2022. In the above structure, by disposing the coating 203 entirely in the recess 2023 and filling the recess 2023 completely, the welded portion 2021 can be better covered by the coating 203, facilitating improving protection of the welded portion 2021, better reducing the likelihood of corrosion of the welded portion 2021, and improving the reliability of the battery cell 20.

In conclusion, it should be noted that the above embodiments are merely for describing the technical solutions of the present application rather than for limiting the present application. Although the present application has been described in detail with reference to the above embodiments, persons of ordinary skill in the art should appreciate that they can still make modifications to the technical solutions described in the embodiments or make equivalent replacements to some or all technical features thereof without departing from the scope of the technical solutions of the embodiments of the present application. All such modifications and equivalent replacements shall fall within the scope of claims and specification of the present application. In particular, as long as there is no structural conflict, the various technical features mentioned in the embodiments can be combined in any manner. The present application is not limited to the specific embodiments disclosed in this specification, but includes all technical solutions falling within the scope of the claims.

## Claims

1. A battery cell, comprising:
an electrode assembly, comprising a tab;
a housing, wherein the electrode assembly is accommodated in the housing, the housing is provided with a welded portion, and the welded portion is electrically connected to the tab; and
a coating, disposed on an outer side of the housing and covering the welded portion.

2. The battery cell according to claim 1, wherein the housing comprises a wall portion, an outer side of the wall portion is provided with a recess, and a bottom wall of the recess is provided with the welded portion; and
at least part of the coating is accommodated in the recess.

3. The battery cell according to claim 2, wherein the coating is entirely accommodated in the recess.

4. The battery cell according to claim 3, wherein an outer surface of the coating is flush with an outer surface of the wall portion.

5. The battery cell according to any one of claims 1 to 4, wherein a thickness of the coating is H1, and 5 µm ≤ H1 ≤ 400 µm.

6. The battery cell according to claim 5, wherein 10 µm ≤ H1 ≤ 200 µm.

7. The battery cell according to any one of claims 2 to 4, wherein the housing further comprises a plating layer disposed on the outer side of the wall portion, the plating layer surrounding the welded portion; and the coating is connected to the plating layer.

8. The battery cell according to claim 7, wherein, along a thickness direction of the wall portion, a projection of the welded portion lies within a range of the coating.

9. The battery cell according to any one of claims 7 to 8, wherein the wall portion is made of carbon steel, and the plating layer is a nickel plating layer.

10. The battery cell according to any one of claims 7 to 9, wherein a thickness of the plating layer is H2, and 0.05 µm ≤ H2 ≤ 10 µm.

11. The battery cell according to any one of claims 7 to 10, wherein 0.1 µm ≤ H2 ≤ 5 µm.

12. The battery cell according to any one of claims 1 to 11, wherein the coating comprises a coating material, the coating material comprising polyacrylate, polyurethane, or epoxy resin.

13. The battery cell according to claim 12, wherein a viscosity range of the coating material is 0.5 cps to 2000 cps.

14. The battery cell according to claim 13, wherein the viscosity range of the coating material is 1 cps to 1000 cps.

15. The battery cell according to any one of claims 1 to 14, wherein an adhesion force of the coating to the welded portion ranges from level 0 to level 1.

16. The battery cell according to any one of claims 1 to 15, wherein a hardness of the coating is less than a hardness of the welded portion.

17. The battery cell according to any one of claims 1 to 16, wherein a distance by which an edge of the coating extends beyond an edge of the welded portion is L, and L > 0.1 mm.

18. A battery, comprising the battery cell according to any one of claims 1 to 17.

19. An electric apparatus, comprising the battery according to claim 18, wherein the battery is configured to supply electrical energy.
